# EUROPÄISCHE PATENTANMELDUNG

(11) **EP 4 648 261 A1**
(43) Veröffentlichungstag der Anmeldung: **12.11.2025**
(21) Anmeldenummer: 24174911.8
(22) Anmeldetag: 08.05.2024
(51) Int. Cl.: H02K 1/04, H01F 41/02, H01F 41/16, H02K 15/02

(54) **VERFAHREN ZUR HERSTELLUNG EINES MAGNETBLECHSTAPELS, STATOR UND ELEKTRISCHE MASCHINE**

(71) Anmelder: Siemens Aktiengesellschaft, 80333 München (DE)
(72) Erfinder: Denneler, Stefan, 81371 München (DE); Männer, Ruth, 85667 Oberpframmern (DE); Rieger, Gotthard, 80636 München (DE); Schlichting, Johannes, 99976 Lengenfeld unterm Stein (DE); Schmidt, Alexander, 84034 Landshut (DE)
(74) Vertreter: Siemens Patent Attorneys

(57) **Zusammenfassung**

Die Erfindung betrifft ein Verfahren zur Herstellung eines Magnetblechstapels (2), umfassend folgende Schritte:
- Herstellen einer Magnetblechfolie (12) wobei zunächst ein Schlicker 6 umfassend weichmagnetische Partikel, die mit Bindemittel vermischt sind zu einer ersten, weichmagnetischen Schicht (8) geformt wird,
- Trocknen der weichmagnetischen Schicht (8),
- Aufbringen einer zweiten, elektrisch isolierenden Schicht (10), auf die weichmagnetische Schicht (8), so dass eine Magnetblechfolie (12) entsteht
- fächerartiges Falten der Magnetblechfolie (12) zu einem Folienstapel (14), so dass jeweils alternierend im Folienstapel (14) zwei weichmagnetische Schichten (8) und zwei elektrisch isolierende Schichten (10) aufeinander liegen,
- heraustrennen eines Magnetblechstapels (2-1) im Grünzustand aus dem gefalteten Folienstapel (14),
- Entbindern des Magnetblechstapels (2-1),
- Sintern des Magnetblechstapels (2-1) zu einem endkonturnahen Magnetblechstapel (2-2), sodass
- jeweils zwei übereinander liegende gleichartige Schichten (8, 10), zwei weichmagnetische Schichten (8) und zwei elektrisch isolierende Schichten (10) im gesinterten Zustand des Magnetblechstapels (2-2) jeweils ein Magnetblech (16) bilden.

## Beschreibung

Die Erfindung betrifft ein Verfahren zur Herstellung eines Magnetblechstapels mit den Merkmalen des Patentanspruchs 1, einen Stator nach Anspruch 14 und eine elektrische Maschine nach Anspruch 15.

Konventionelle Elektrobleche und Blechgeometrien werden aus isolationsbeschichtetem gewalztem metallischem Bandmaterial gestanzt oder gelasert und in nachfolgenden Prozessen gestapelt, verpresst und gefügt. Der Stapelfaktor ergibt sich aus der typischen ca. 2 bis 5 µm dünnen Isolationslage und der typischerweise mehr als 150 µm betragenden Blechschicht. Die dabei entstehenden Stanzabfälle, die sich auf ca. 50 % des Gesamtvolumens belaufen, werden wieder eingeschmolzen. Es erfolgt ein weiterer aufwändiger Herstellungsprozess bis wiederum ein Bandmaterial mit den entsprechenden elektrischen Eigenschaften verwendbar ist. Dieser Prozess ist sowohl ökonomisch als auch ökologisch wenig vorteilhaft.

Alternativ werden inzwischen auch Magnetbleche im Siebdruckverfahren hergestellt, bei dem einzelne Magnetblechlamellen nach dem Sintern zu einem Magnetblechstapel einzeln aufgestapelt werden. Auch dieser Prozess ist für die großtechnische Herstellung kostenintensiv, wobei mit diesem Verfahren sehr dünne Magnetbleche erzeugt werden können, die bezüglich Wirbelstromverluste in elektrischen Maschinen gegenüber dem gestanzten metallischen Bandmaterial einen erheblichen Vorteil aufweisen.

Weichmagnetische Blechpakete für den Einsatz in Rotoren und Statoren elektrischer Maschinen werden als Blechstapel mit elektrischer Isolation zwischen den Blechlamellen aufgebaut, um Wirbelstromverluste im Betrieb zu minimieren. Dies ist im Stand der Technik auch bei pulverbasierten gedruckten Magnetblechen der Fall. Magnetbleche können vorteilhaft und ressourceneffizient sowie verlustoptimiert endkonturnah gedruckt werden, wobei die Herausforderungen der elektrischen Isolation der Einzelbleche gegenüber der Isolation von Elektrostahlbändern im konventionellen Prozess bestehen. Die Isolation der Einzelblech erfordert einen zusätzlichen Prozessschritt nachdem bereits die thermischen Sinterprozesse abgeschlossen sind. Dies ist technisch aufwändig und somit kostenintensiv zur Herstellung von Magnetblechen.

Die Aufgabe der Erfindung besteht darin, ein Verfahren zur Herstellung eines Magnetblechstapels bereitzustellen, das gegenüber dem Stand der Technik zum einen eine dünnere Magnetblechdicke gewährleistet, gegenüber den siebgedruckten Magnetblechen prozessual weniger aufwändig ist und gegenüber beiden Prozessen eine bessere Rezyklierbarkeit von Stanzabfällen aufweist.

Die Lösung der Aufgabe besteht in einem Verfahren mit den Merkmalen des Patentanspruchs 1.

Das beschriebene Verfahren zur Herstellung eines Magnetblechstapels umfasst dabei folgende Schritte:
- Herstellen einer Schlickerfolie, wobei zunächst ein Schlicker, der weichmagnetische Partikel umfasst, die mit Bindemittel vermischt sind, zu einer ersten, weichmagnetischen Schicht geformt wird,
- Trocknen der weichmagnetischen Schicht,
- Aufbringen einer zweiten, elektrisch isolierenden Schicht, auf die weichmagnetische Schicht, sodass eine Magnetblechfolie entsteht,
- fächerartiges Falten der Magnetblechfolie zu einem Folienstapel, sodass jeweils alternierend im Folienstapel zwei weichmagnetische Schichten und zwei elektrisch isolierende Schichten aufeinander liegen.
- Anschließend erfolgt ein Heraustrennen eines Magnetblechstapels im Grünzustand aus dem gefalteten Folienstapel.
- Es folgt ein Entbindern des Magnetblechstapels und ein Sintern des Magnetblechstapels zu einem endkonturnahen Magnetblechstapel, sodass
- jeweils zwei übereinander liegende gleichartige Schichten, also zwei weichmagnetische Schichten und zwei elektrisch isolierende Schichten im gesinterten Zustand des Magnetblechstapels jeweils ein Magnetblech bilden.

Ein Vorteil der Erfindung gegenüber dem Stand der Technik besteht darin, dass eine schlickergegossene, eine schlickergezogene Folie oder auch Schlicker gesprühte Folie mit einer definierten Dicke, unter der die Dicke liegt, die herkömmliche gestanzte Magnetbleche erreichen, zu einem Stapel gefaltet werden und dabei im sogenannten Grünzustand vorliegen.

Unter einem Schlicker wird dabei eine viskose Flüssigkeit verstanden, die ein flüssiges Trägermedium, beispielsweise Wasser, sowie Bindemittel und gegebenenfalls weiter funktionale Bestandteil wie Thixotropiemittel, durch die die gewünschte Viskosität und das gewünschte rheologische verhalten des Schlickers gewährleisten. Der Schlicker wird üblicherweise gegossen oder gezogen, er kann aber auch gesprüht werden. Der Grünzustand der Schlickerfolie besagt, dass Bindemittel, die einzelne weichmagnetische Partikel zusammenhalten noch in der Folie enthalten sind, flüssige Trägermedium aber im Wesentlichen durch Trocknen entfernt ist. In diesem Zustand ist mit einem sehr geringen technischen Aufwand beispielsweise durch einen Stanzprozess bei sehr geringem Werkzeugverschleiß der Magnetblechstapel heraustrennbar, beispielsweise ausstanzbar. Grundsätzlich können auch andere Vereinzelungstechniken verwendet werden, diese wären beispielsweise Wasserstrahlschneiden oder Laserschneiden.

Die hierbei anfallenden Stanzreste oder generell gesprochen, Vereinzelungsreste können relativ einfach rezykliert werden und der Herstellung eines neuen Schlickers zugeführt werden. Gegenüber dem Stand der Technik der herkömmlichen Magnetblechherstellung aus einer gewalzten Magnetblechfolie hat dies den Vorteil, dass das Rezyklieren von Stanzresten nachhaltiger ist. Gegenüber dem bereits beschriebenen Siebdruckverfahren zur Herstellung von Magnetblechgrünkörpern wird durch das beschriebene Verfahren ein wirtschaftlicherer prozesstechnischer Durchsatz erzielt.

In einer weiteren vorteilhaften Ausgestaltungsform der Erfindung bestehen die weichmagnetischen Partikel zumindest aus 95 % reinem Eisen, wobei die weichmagnetischen Eigenschaften der Partikel umso besser werden, umso höher der Eisenanteil ist. Ein Reineisen wäre hierfür rein physikalisch gesehen das bevorzugte Material, wobei dem Eisen aus technischen Gründen häufig Legierungsbestandteil zugesetzt werden, so ist beispielsweise die Zugabe von 4 % Silicium zum reinen Eisen aus mechanischen Gründen zweckmäßig.

In einer weiteren vorteilhaften Ausgestaltungsform beträgt die Dicke der weichmagnetischen Schicht weniger als 100 µm, besonders bevorzugt zwischen 40 µm und 100 µm. Auf diese Weise können Magnetbleche erzeugt werden, die eine Dicke zwischen 80 µm und 200 µm aufweisen. Es ist dabei zu berücksichtigen, dass aufgrund der beschriebenen Technologie jeweils gleiche Schichten, also in diesem Fall zwei weichmagnetische Schichten, eine endgültige Schicht in dem Magnetblech bilden. Wenn die Folie 40 µm aufweist, dann weist die weichmagnetische Schicht im Magnetblech insgesamt dann 80 µm auf, wobei hier noch eine Sinterschwindung von etwa 10 % abzuziehen ist, weshalb die weichmagnetische Schicht nach diesem Beispiel 72 µm aufweist.

Die elektrisch isolierende Schicht weist bevorzugt anorganische, nichtmetallische, elektrisch isolierende Partikel auf. Darunter fallen insbesondere Oxide oder Nitride, wobei besonders vorteilhaft die Oxide Aluminiumoxid (Al₂O₃), Zirkonoxid (ZrOz), Eisenoxid (Fe₂O₃) oder auch Yttrium stabilisiertes Zirkonoxid (YSZ) und/oder Yttriumoxid (Y₂O₃) zählen. Für die Nitride haben sich insbesondere das Aluminiumnitrid (AIN) und das Siliciumnitrid (Si₃N₄) als zweckmäßig herausgestellt.

Die elektrisch isolierende Schicht kann über mehrere technologisch gleichwertige Verfahren aufgebracht werden. Sie kann ähnlich wie die weichmagnetische Schicht, die in Form eines Schlickers gezogen oder gegossen wird und mit einem Rakel verteilt wird, ebenfalls in einem Schlickerverfahren auf die getrocknete weichmagnetische Schicht aufgebracht werden. Technologisch günstiger ist jedoch das Aufsprühen der elektrisch isolierenden Schicht auf die getrocknete weichmagnetische Schicht. Dabei weist die elektrisch isolierende Schicht bevorzugt eine Schichtdicke auf, die zwischen 2 µm und 8 µm beträgt.

Der Magnetblechstapel, der durch Falten der Magnetblechfolie erzeugt wird, weist dabei in einer bevorzugten Ausgestaltungsform zwischen 5 und 100 Magnetbleche auf. Besonders bevorzugt weist dieser Magnetblechstapel zwischen 10 und 50 Magnetbleche auf. Dabei ist es wiederum zweckmäßig, mehrere Magnetblechstapel zu einem Blechpaket für eine elektrische Maschine zu stapeln. Dabei kann das Blechpaket in Form eines Rotors oder eines Stators ausgestaltet sein, wobei die Darstellung des Blechpaketes als Stator bei der beschriebenen Technologie mehr Vorteile aufweist, als dies für einen Rotor der Fall ist. Daher ist ein weiterer Bestandteil der Erfindung ein Stator für eine elektrische Maschine, der nach einem Verfahren nach Anspruch 13 hergestellt wird. Ferner ist ein Bestandteil der Erfindung eine elektrische Maschine, die einen Stator nach Anspruch 14 umfasst. Weitere Ausgestaltungsformen und weitere Merkmale der Erfindung werden in den weiteren Figuren schematisch beschrieben. Merkmale mit derselben Bezeichnung aber in unterschiedlicher Ausgestaltungsform werden dabei mit denselben Bezugszeichen versehen. Die grafischen Darstellungen in den Figuren sind rein schematischer Natur und stellen daher keine Einschränkung des Schutzbereiches dar.

Dabei zeigen:
- Figur 1: eine schematische Darstellung der Herstellung einer Magnetblechfolie,
- Figur 2a: eine Magnetblechfolie nicht maßstabsgetreu im Querschnitt,
- Figur 2b: die Magnetblechfolie aus Figur 2a mit einer Faltung,
- Figur 2c: die Magnetblechfolie aus Figur 2b mit einer zweiten Faltung,
- Figur 3: einen Magnetblechstapel aus einer mehrfach gefalteten Magnetblechfolie nach Figur 2c im Zustand vor der Ausstanzung,
- Figur 4: eine schematische Darstellung der Entbinderung und der Sinterung des Magnetblechstapels und
- Figur 5: ein fertig gesinterter Magnetblechstapel.

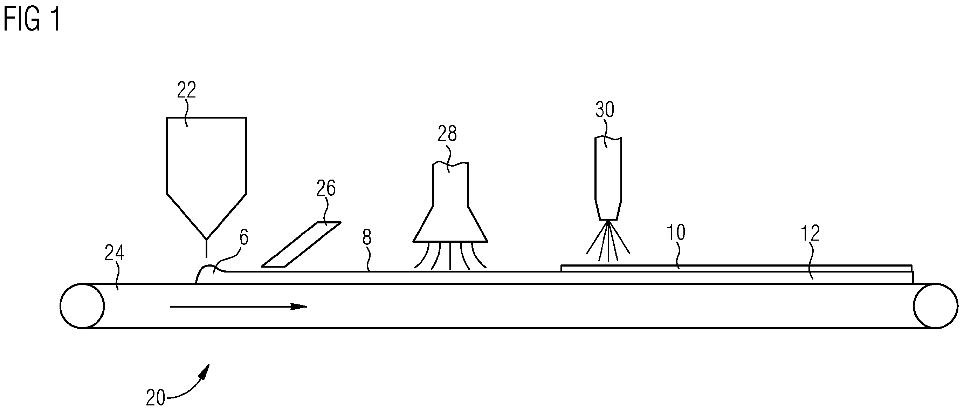

In Figur 1 ist zunächst in schematischer Form die Herstellung einer Magnetblechfolie dargestellt. Hierzu wird im Wesentlichen auf das Verfahren des Schlickerziehens bzw. Schlickergießens zurückgegriffen. Hierzu wird ein Schlicker 6 durch eine Schlicker-DosierVorrichtung 22 auf ein Förderband 24 gegossen und mittels eines Rakels 26 zur ersten weichmagnetischen Schicht gezogen. Die Schichtdicke der ersten weichmagnetischen Schicht (diese wird im Weiteren als erste Schicht bezeichnet) beträgt ca. 50 µm. Es folgt eine Trocknung der Oberfläche der ersten Schicht mittels einer Trocknungsvorrichtung und im Weiteren wird mittels einer Sprühvorrichtung eine zweite, elektrisch isolierende Schicht, die als elektrisch isolierende Partikel Aluminiumoxid umfasst, auf die getrocknete Oberfläche der ersten Schicht aufgesprüht. Die Schichtdicke der zweiten, elektrisch isolierenden Schicht, die im Weiteren als zweite Schicht bezeichnet wird, beträgt zwischen 5 und 10 µm. Nach einem weiteren hier nicht dargestellten Trocknungsprozess erhält man eine Folie, die im Weiteren als Magnetblechfolie 12 bezeichnet wird.

Dabei ist anzumerken, dass der Schlicker 6 neben den weichmagnetischen Partikeln, die bevorzugt als Eisenpartikel mit möglichst hohem Eisenanteil von mehr als 95 % ausgestaltet sind, auch noch Bindemittel und Thixotropiemittel aufweist. Mittels diesen in der Regel organischen Bestandteilen sowie ein Wasserbestandteil wird die Viskosität des Schlickers 6 so eingestellt, dass er sich in möglichst dünne Folien mittels des Rakels 26 auf dem Förderband 24 ziehen lässt. Auch die zweite, elektrisch isolierende Schicht 10 weist dabei in der Regel organische Bindemittel auf, die eine besonders gute Verteilung der anorganischen, elektrisch isolierenden Partikel auf der Oberfläche der ersten Schicht gewährleisten.

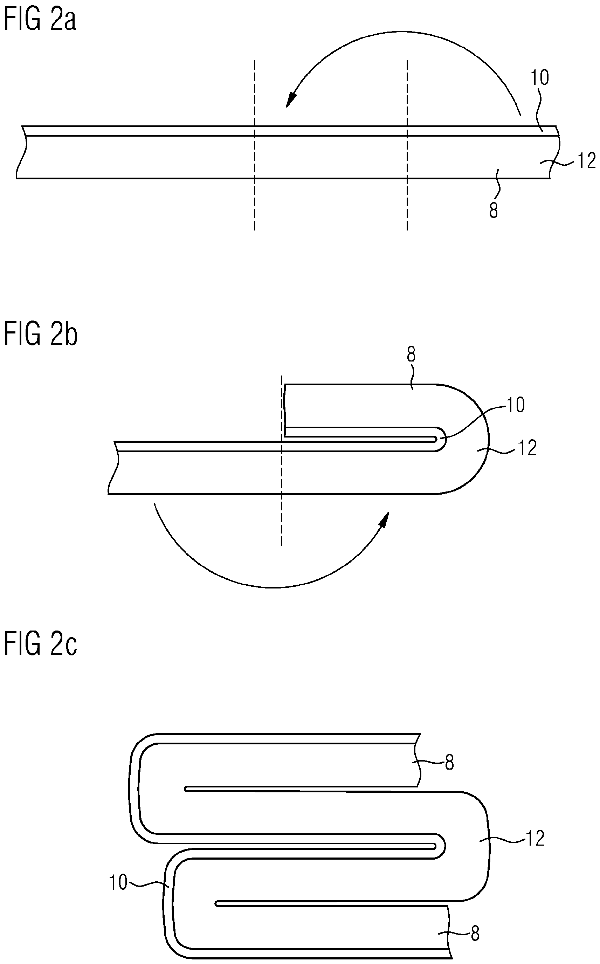

In den Figuren 2a bis 2c ist die weitere Verarbeitung der so erhaltenen Magnetblechfolie 12 dargestellt. In Figur 2a ist rein schematisch der Querschnitt der Magnetblechfolie 12 abgebildet, wobei im unteren Bereich die dickere erste Schicht zu erkennen ist und darauf die zweite, elektrisch isolierende Schicht aufgebracht ist, die deutlich dünner ist als die erste Schicht 8. Mit dem gebogenen Pfeil in Figur 2a wird die erste Faltrichtung der Magnetblechfolie angedeutet. Diese ist nun in Figur 2b umgesetzt, sodass eine erste Falte gelegt ist. Hierbei ist es so, dass die beiden zweiten Schichten 10 nun in der so dargestellten Falte übereinanderliegen. Das heißt die Schichtdicke der zweiten Schicht 10 wird durch diese Maßnahme im Wesentlichen verdoppelt. Dies hat jedoch auch technische Vorteile, denn wenn beim Aufbringen der zweiten Schicht 10 bzw. durch die Sprühvorrichtung 30 Stellen vorhanden sind, bei denen die zweite Schicht zu dünn oder gar nicht aufgetragen wurde, so könnte dies zu einem elektrischen Kurzschluss zwischen den einzelnen Magnetblechen führen, wenn diese nicht isolierte Stelle auf eine erste Schicht treffen würde. In diesem Fall, wie er in Figur 2b zu erkennen ist, werden etwaige Fehlstellen in der zweiten Schicht 10 durch die gegenüberliegende zweite Schicht 10 kompensiert, sodass eine Stelle ohne Isolierung nahezu ausgeschlossen ist.

In Figur 2c wird nun die zweite Faltung vorgenommen, wie sie in Figur 2b mit gebogenem Pfeil angedeutet ist. In diesem Fall ist es so, dass nun die zweite Schicht 10 außen liegt und die beiden ersten Schichten 8 somit aufeinanderliegen. Mit dieser Methode wird auch die Dicke der ersten Schicht 8 bezogen auf die ursprüngliche Dicke in der Magnetblechfolie 12 verdoppelt. Die erste Schicht 8 hat in der Magnetblechfolie eine Dicke von 50 µm, nach dem zweiten Faltprozess hat sie dementsprechend eine Dicke von im Wesentlichen 100 µm.

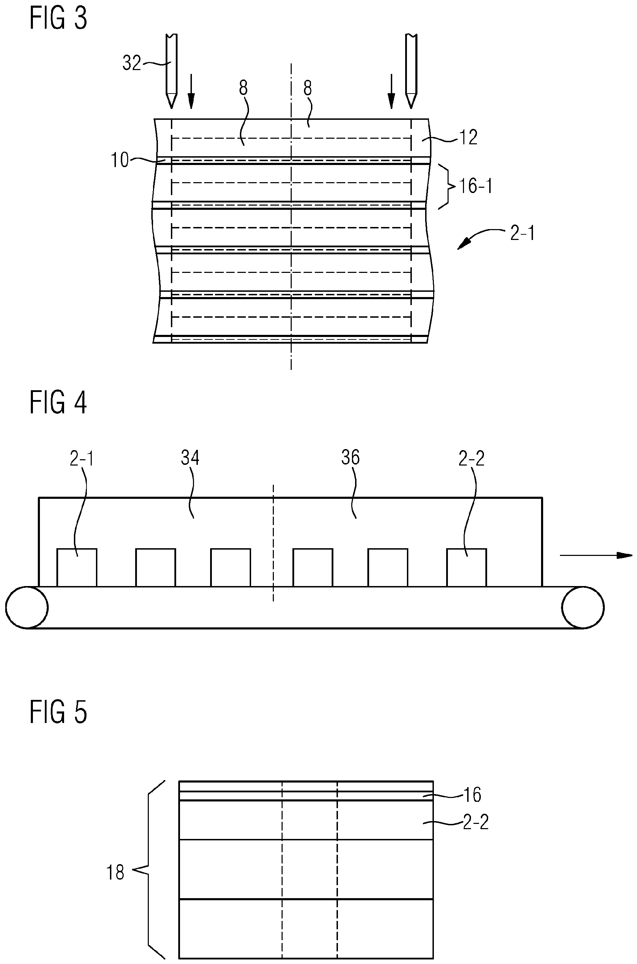

Die in Figur 2 beschriebenen Faltungen werden nun mehrfach fortgesetzt, bis ein Magnetblechstapel 2-1 im Grünzustand gemäß Figur 3 aufgebaut ist. Dabei ist anzumerken, dass jeweils eine doppelte Lage an ersten Schichten 8 und eine doppelte Lage an zweiten Schichten 10 im späteren Magnetblechstapel 2-2 (die Bezeichnung 2-2 bezieht sich auf den Magnetblechstapel im gesinterten Zustand) ergeben. Die erwähnten Abschnitte ergeben ein Magnetblech 16, wobei anzumerken ist, dass die einzelnen Komponenten des Magnetblechs 16 aus verschiedenen Abschnitten der Magnetblechfolie stammen. In Figur 3 ist ferner angedeutet, dass mittels eines Stanzwerkzeuges 32 die Ränder des Magnetblechstapels 2-1 im Grünzustand ausgetanzt werden und gegebenenfalls auch noch Innenkonturen des Magnetblechstapels 2-1 ebenfalls ausgestanzt werden. Da die einzelnen Lagen durch die beschriebene Faltung exakt übereinanderliegen, wird durch diese Maßnahme bezüglich der Lagenpositionierung ein ausgesprochen genaues Ergebnis für die Außenkontur des Magnetblechstapels 2-1 erzielt.

In Figur 4 ist dargestellt wie der so erzeugte Magnetblechstapel 2-1, der üblicherweise zwischen 50 und 100 Magnetbleche 16-1 im Grünzustand aufweist, einer thermischen Behandlung unterzogen wird. Hierzu wird, hier rein exemplarisch und beispielhaft, ein Durchlaufofen dargestellt, wobei die Magnetblechstapel 2-1 als Grünteile in diesen Durchlaufofen eingebracht werden und dieser zwei Temperaturzonen aufweist. Zum einen ein Entbinderungsofen 34, bei dem Temperaturen zur thermischen Zersetzung der organischen Bindemittel vorherrschen, die zwischen 200°C und 600°C betragen. Im Weiteren folgt ein Sinterprozess in einem Sinterofen 36, bei dem die Magnetblechstapel 2-1 in ihren gesinterten Zustand übergeführt werden und ab jetzt als Magnetblechstapel 2-2 bezeichnet werden. Bei dem Sinterprozess kommt es zu diffusionsgesteuertem Materialaustausch zwischen den einzelnen Partikeln der Eisenpartikel und der anorganischen elektrisch isolierenden Partikel. Dabei wird das Material zunehmend verfestigt und Porosität abgebaut, ohne dass dabei eine Schmelzphase im Wesentlichen vorliegt. Da die Magnetbleche mit alternierend weichmagnetischen Schichten 8 und elektrisch isolierenden Schichten 10 aufgebaut sind, kann beim gemeinsamen Sintern bei entsprechend eingestellten Sinterparameter verhindert werden, dass das Magnetblech als monolithischer Block entsteht. Da die elektrisch isolierenden Partikel der der Schicht 10 als keramische Partikel eine höhere Sintertemperatur aufweisen als die metallischen, weichmagnetischen Partikel der Schicht 8, versintern diese weniger stark als die weichmagnetische Schicht bei derselben Sintertemperatur. Daher können horizontale Ausdehnungen zwischen den einzelnen Magnetblechen 16 im gesinterten Zustand erfolgen.

Bei der Darstellung des Ofens gemäß Figur 4 wird ein Durchlaufen gewählt. Es sind jedoch auch andere Möglichkeiten der thermischen Behandlung der Magnetblechstapel 2 möglich. Beispielsweise können reine Sinteröfen verwendet werden, in denen jeweils mehrere Chargen von Magnetblechen für einen Sinterprozess eingesetzt werden und die Temperatur hochgefahren wird und wieder abgekühlt wird.

In Figur 5 ist nun ein Blechpaket 18 dargestellt, für das mehrere Magnetblechstapel 2-2 im gesinterten Zustand übereinander gesetzt werden. Durch das Aufbauen mehrerer Magnetblechstapel 2-2 kann die Höhe des Blechpaketes 18 angepasst werden und diese dann für verschiedene elektrische Maschinen eingesetzt werden. In dem Fall ist es so, dass das Blechpaket 18 in Form eines Stators für eine elektrische Maschine ausgestaltet ist.

### Bezugszeichen

- 2: Magnetblechstapel
- 4: Schlickerfolie
- 6: Schlicker
- 8: erste weichmagnetische Schicht
- 10: zweite elektrisch isolierende Schicht
- 12: Magnetblechfolie
- 14: Folienstapel
- 16: Magnetblech
- 18: Blechpaket
- 20: Schlickerziehvorrichtung
- 22: Schlicker-Dosierung-Vorrichtung
- 24: Förderband
- 26: Rakel
- 28: Trocknungsvorrichtung
- 30: Sprühvorrichtung
- 32: Stanzwerkzeug
- 34: Entbinderungsofen
- 36: Sinterofen

## Patentansprüche

1. Verfahren zur Herstellung eines Magnetblechstapels (2), umfassend folgende Schritte:
- Herstellen einer Magnetblechfolie (12) wobei zunächst ein Schlicker (6) umfassend weichmagnetische Partikel, die mit Bindemittel vermischt sind zu einer ersten, weichmagnetischen Schicht (8) geformt wird,
- Trocknen der weichmagnetischen Schicht (8),
- Aufbringen einer zweiten, elektrisch isolierenden Schicht (10), auf die weichmagnetische Schicht (8), so dass eine Magnetblechfolie (12) entsteht
- fächerartiges Falten der Magnetblechfolie (12) zu einem Folienstapel (14), so dass jeweils alternierend im Folienstapel (14) zwei weichmagnetische Schichten (8) und zwei elektrisch isolierende Schichten (10) aufeinander liegen,
- heraustrennen eines Magnetblechstapels (2-1) im Grünzustand aus dem gefalteten Folienstapel (14),
- Entbindern des Magnetblechstapels (2-1),
- Sintern des Magnetblechstapels (2-1) zu einem endkonturnahen Magnetblechstapel (2-2), sodass
- jeweils zwei übereinander liegende gleichartige Schichten (8, 10), zwei weichmagnetische Schichten (8) und zwei elektrisch isolierende Schichten (10) im gesinterten Zustand des Magnetblechstapels (2-2) jeweils ein Magnetblech (16) bilden.

2. Verfahren nach Anspruch 1, **dadurch gekennzeichnet, dass** die weichmagnetischen Partikel zu mehr als 95 Gew. % aus Eisen bestehen.

3. Verfahren nach Anspruch 1 oder 2, **dadurch gekennzeichnet, dass** die Dicke der weichmagnetischen Schicht (8) weniger als 100 µm beträgt,

4. Verfahren nach Anspruch 3, **dadurch gekennzeichnet, dass** die weichmagnetische Schicht (8) zwischen 40 µm und 100 µm beträgt.

5. Verfahren nach einem der vorhergehenden Ansprüche, **dadurch gekennzeichnet, dass** die elektrisch isolierende Schicht (10) anorganische nichtmetallische elektrisch isolierende Partikel umfasst.

6. Verfahren nach Anspruch 5, **dadurch gekennzeichnet, dass** die nichtmetallische elektrisch isolierende Partikel Oxide oder Nitride umfassen.

7. Verfahren nach Anspruch 5, **dadurch gekennzeichnet, dass** die nichtmetallische elektrisch isolierende Partikel Al2O3, ZrO2, Fe2O3, YSZ, Y2O3, AIN, und/oder Si3N4 umfassen.

8. Verfahren nach einem der vorhergehenden Ansprüche, **dadurch gekennzeichnet, dass** die elektrisch isolierenden Schicht (10) eine Schichtdicke zwischen 2 µm und 8 µm aufweist.

9. Verfahren nach einem der vorhergehenden Ansprüche, **dadurch gekennzeichnet, dass** die elektrisch isolierende Schicht (10) mittels eines Sprühverfahren aufgebracht wird.

10. Verfahren nach einem der vorhergehenden Ansprüche, **dadurch gekennzeichnet, dass** der Magnetblechstapel (2) zwischen 5 und 100 Magnetbleche aufweist.

11. Verfahren nach Anspruch 10, **dadurch gekennzeichnet, dass** der Magnetblechstapel (2) zwischen 10 und 50 Magnetbleche aufweist.

12. Verfahren nach einem der vorhergehenden Ansprüche, **dadurch gekennzeichnet, dass** mehrere Magnetblechstapel (2) zu einem Blechpaket (18) für eine elektrische Maschine gestapelt werden.

13. Verfahren nach Anspruch 12, **dadurch gekennzeichnet, dass** das Blechpaket (18) ein Rotor oder ein Stator ist.

14. Stator einer elektrischen Maschine mit einem Blechpaket (18) hergestellt nach einem Verfahren nach Anspruch 13.

15. Elektrische Maschine umfassend einen Stator nach Anspruch 14.
